# EUROPÄISCHE PATENTSCHRIFT

(11) **EP 2 390 658 B1**
(45) Veröffentlichungstag und Bekanntmachung des Hinweises auf die Patenterteilung: **28.10.2015**
(21) Anmeldenummer: 11167909.8
(22) Anmeldetag: 27.05.2011
(51) Int. Cl.: G01N 29/26

(54) **Ultraschallprüfkopf zum Prüfen eines Werkstückes in einem konkav gekrümmten Bereich seiner Oberfläche**
Ultrasound probe for inspecting a workpiece in a concave area of its surface
Tête de contrôle à ultrasons pour le contrôle d'une pièce usinée dans une zone incurvée concave de sa surface

(30) Priorität: 28.05.2010 DE 102010029474
(43) Veröffentlichungstag der Anmeldung: 30.11.2011
(73) Patentinhaber: AREVA GmbH, 91052 Erlangen (DE)
(72) Erfinder: Zaus, Edgar, 90439 Nürnberg (DE); Meier, Rainer, 91058 Erlangen (DE); Röhling, Harald, 96114 Hirschaid (DE)
(74) Vertreter: Meissner, Bolte & Partner GbR

(56) Entgegenhaltungen:
- EP-A1- 0 268 818
- EP-A1- 2 073 003
- EP-A2- 0 901 015
- WO-A1-2008/091151

## Beschreibung

Die Erfindung bezieht sich auf einen Ultraschallprüfkopf zum Prüfen eines Werkstückes in einem konkav gekrümmten Bereich seiner Oberfläche.

In einer Vielzahl von Anwendungsfällen ist es erforderlich, Werkstücke oder Bauteile in einem Bereich ihrer Oberfläche mit einem Ultraschallprüfkopf zu prüfen, in dem diese eine konkave Krümmung mit kleinem Innenradius aufweisen. Dies ist beispielsweise der Fall bei sogenannten T-Stringern, die im Flugzeugbau als Längsversteifungen dienen. Zum Nachweis von Fehlern im Übergangsbereich zwischen den beiden Schenkeln des T-Stringers muss bei einem Ultraschallprüfkopf, der annähernd im Mittelpunkt des von der gekrümmten Oberfläche gebildeten, den Innenradius festlegenden Kreises angeordnet ist, ein Prüfbereich von etwa 90° abgedeckt werden.

Um den effektiven Winkel, unter dem sich der von einem Ultraschallprüfkopf emittierte Ultraschall relativ zur Normalen der Oberfläche des zu prüfenden Werkstücks ausbreitet, bei einem ruhenden Ultraschallprüfkopf variieren zu können, ist es bekannt, die sogenannte Gruppenstrahler-Technik anzuwenden, bei der als Ultraschallschwinger ein aus einer Vielzahl von nebeneinander angeordneten Wandlerelementen aufgebautes Wandlerarray verwendet wird, deren in einer Reihe angeordnete, als Sende- und Empfangswandler dienenden, Wandlerelemente untereinander zeitlich verzögert angesteuert werden. Abhängig von der Breite der einzelnen Wandlerelemente breitet sich der Ultraschall auch unter anderen Winkeln (Nebenkeulen und Gitterkeulen) als unter dem nominalen Winkel (Hauptkeule) aus. Diese sorgen in der Regel für Störechos, die die Bewertung der Echosignale erschweren oder unmöglich machen. Der nutzbare Schwenkbereich eines solchen Wandlerarrays ist deshalb derjenige Winkelbereich, in dem die Amplitude der Hauptkeule signifikant höher ist als die Amplitude der Nebenkeulen. Je kleiner die Breite der Wandlerelemente ist, desto größer ist auch der mögliche Schwenkbereich. Wandlerelementbreiten unter 0,5 mm sind jedoch fertigungstechnisch nur aufwendig zu realisieren. Grundsätzlich kann der Schwenkbereich auch durch Verringerung der Prüffrequenz vergrößert werden. Durch eine solche Verringerung der Prüffrequenz ist jedoch die räumliche Auflösung in Ausbreitungsrichtung des Ultraschallpulses (Tiefenauflösungsvermögen) verringert.

Um Echosignale aus einem breiten Winkelbereich empfangen zu können, ist es beispielsweise aus der EP 0 268 818 A1 bekannt, neben einem als Sender dienenden linearen Wandlerarray ein oder zwei als Empfänger dienende matrixförmige Wandlerarrays anzuordnen, deren Empfangsflächen auch geneigt zueinander orientiert sein können.

Der Erfindung liegt daher die Aufgabe zugrunde, einen Ultraschallprüfkopf anzugeben, mit dem es möglich ist, ein Werkstück oder ein Bauteil in einem konkav gekrümmten Bereich seiner Oberfläche mit geringem technischem Aufwand auch dann zu prüfen, wenn dieser einen kleinen Innenradius aufweist.

Die genannte Aufgabe wird gemäß der Erfindung gelöst mit einem Ultraschallprüfkopf mit den Merkmalen des Patentanspruches 1. Gemäß diesen Merkmalen enthält der Ultraschallprüfkopf zwei lineare Wandlerarrays, die jeweils aus einer Vielzahl von untereinander zeitverzögert ansteuerbaren und in Richtung einer Längsmittelachse in einer Reihe angeordneten Wandlerelementen aufgebaut sind, und die an ihren Längsseiten nebeneinander derart angeordnet sind, dass deren Längsmittelachsen und damit deren Sende- bzw. Empfangsflächen derart geneigt zueinander orientiert sind, dass sich die von den Sende- bzw. Empfangsflächen aufgespannten Ebenen in einer senkrecht zur Längsmittelachse verlaufenden Geraden schneiden.

Mit anderen Worten: Es stehen zwei jeweils als Sender und Empfänger dienende lineare Wandlerarrays zur Verfügung, mit denen voreinander verschiedene Schwenkwinkelbereiche erfasst werden.

Durch diese Maßnahme wird demnach der nutzbare Schwenkwinkelbereich des Ultraschallprüfkopfes abhängig vom Neigungswinkel, unter dem die Längsmittelachsen zueinander geneigt sind, vergrößert. Auf diese Weise ist es möglich, den gesamten gekrümmten Bereich zwischen den Schenkeln eines T-Stringers prüftechnisch zu erfassen, ohne dass hierzu eine Lageveränderung des Ultraschallprüfkopfes erforderlich ist.

Wenn die Sende- bzw. Empfangsflächen derart geneigt zueinander orientiert sind, dass sich die von den Sende- bzw. Empfangsflächen aufgespannten Ebenen in einer senkrecht zur Längsmittelachse verlaufenden Geraden schneiden, die vorzugsweise mit der senkrecht zur Längsmittelachse der Sende- bzw. Empfangsfläche der Wandlerarrays jeweils verlaufenden Mittelachse der Sende- bzw. Empfangsflächen zusammenfällt, sind die Schallausbreitungsbedingungen für beide Wandlerarrays bei kreisförmig gekrümmten Oberflächen identisch, so dass die jeweils gemessenen Echosignale unmittelbar miteinander vergleichbar sind. Weitere vorteilhafte Ausgestaltungen der Erfindung sind in den abhängigen Ansprüchen 4 und 5 angegeben.

Zur weiteren Erläuterung der Erfindung wird auf das in den Figuren dargestellte Ausführungsbeispiel verwiesen. Es zeigen:
- Fig. 1 und 2: einen Ultraschallprüfkopf gemäß der Erfindung in einem Quer- bzw. Längsschnitt jeweils in einem schematischen Prinzipbild,
- Fig. 3: den Ultraschallprüfkopf gemäß der Erfindung in einer Prüfposition an einem T-Stringer ebenfalls in einer vereinfachten Prinzipdarstellung.

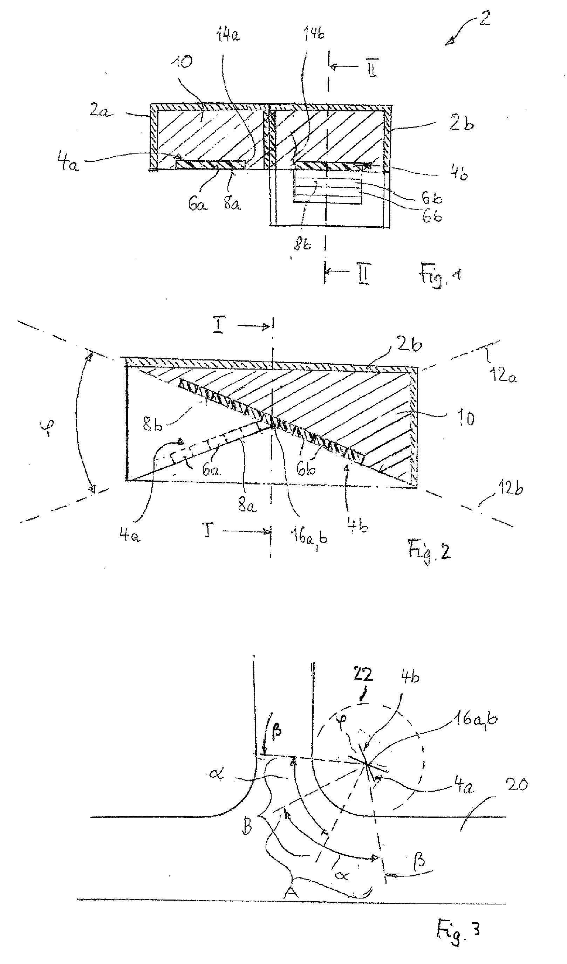

Gemäß Fig. 1 und 2 umfasst der Ultraschallprüfkopf 2 in einem Gehäuse zwei nebeneinander angeordnete, identisch aufgebaute, d.h. baugleiche Wandlerarrays 4a, 4b, die jeweils aus einer Vielzahl von Wandlerelementen 6a, 6b aufgebaut sind. Die Wandlerarrays 4a, 4b sind auf ihrer der Sende- bzw. Empfangsfläche 8a, 8b gegenüberliegenden Rückseite in einem Dämpfungskörper 10 eingebettet. Jedes Wandlerarray 4a, 4b dient sowohl als Sender und als Empfänger, d.h. die Echosignale werden jeweils von dem Wandlerarray 4a bzw. 4b empfangen, das die die Echosignale auslösenden Ultraschallsignale gesendet hat.

Die Wandlerelemente 8a, 8b können untereinander zeitverzögert angesteuert werden. Aus Gründen der Übersichtlichkeit sind die zur Ansteuerung der Wandlerelemente erforderlichen elektrischen Kontakte und Leitungen nicht dargestellt.

Die Wandlerelemente 6a, 6b sind jeweils in Richtung einer Längsmittelachse 12a, 12b nebeneinander in einer Reihe angeordnet. Die Wandlerarrays 4a, 4b sind mit ihren Längsseiten 14a bzw. 14b nebeneinander derart angeordnet, dass die Längsmittelachsen 12a bzw. 12b unter einem Winkel ϕ zueinander geneigt sind. Die Wandlerarrays 4a, 4b sind außerdem derart im Gehäuse 2 angeordnet, dass die Sende- bzw. Empfangsflächen 8a bzw. 8b derart geneigt zueinander orientiert sind, dass sich die von den Sende- bzw. Empfangsflächen 8a bzw. 8b jeweils aufgespannten und in Fig. 2 senkrecht zur Zeichenebene orientierten Ebenen in einer senkrecht zur Längsmittelachse 12a bzw. 12b verlaufenden Geraden schneiden, die im Beispiel mit den senkrecht zur Längsmittelachse 12a bzw. 12b jeweils verlaufenden Mittelachsen 16a bzw. 16b der Sende- bzw. Empfangsflächen 8a bzw. 8b zusammenfallen.

Fig. 3 zeigt den Prüfkopf gemäß Fig. 1 und 2 in einer Prüfposition im konkav gekrümmten Bereich der Oberfläche eines Werkstückes 20, im Beispiel ein T-Stringer.

Die Mittelachsen 16a, b der Wandlerarrays 4a bzw. 4b sind annähernd im Mittelpunkt eines Innenkreises 22 angeordnet, der dem Innenradius des konkav gekrümmten Oberflächenbereiches des Werkstückes 20 zugeordnet ist. Mit jedem Wandlerarray 4a, 4b können (nutzbare) Ultraschallsignale in einem Winkelbereich α emittiert und aus diesem Winkelbereich α empfangen werden. Die zugehörigen Schwenkwinkelbereiche A bzw. B überlagern sich jedoch auf Grund der Neigung der Wandlerarrays 4a, 4b nur teilweise, so dass sich ein effektiver Gesamtwinkelbereich β ergibt, der größer als der Winkelbereich α eines einzelnen Wandlerarrays 4a,4b ist und im Beispiel der Figur größer als 90° ist. Ein zusammenhängender Gesamtwinkelbereich β = α+ϕ ergibt sich dabei nur dann, wenn der Neigungswinkel ϕ höchstens gleich dem Winkelbereich α ist (ϕ≤α).

## Patentansprüche

1. Ultraschallprüfkopf zum Prüfen eines Werkstückes (20) in einem konkav gekrümmten Bereich seiner Oberfläche in dessen Gehäuse wenigstens zwei als Sende- und Empfangswandler dienende lineare Wandlerarrays (4a,b) aufgebaut sind , die jeweils aus einer Vielzahl von untereinander zeitverzögert ansteuerbaren und in Richtung einer Längsmittelachse (12a,b) in einer Reihe angeordneten Wandlerelementen (6a,b) aufgebaut sind, und die an ihren Längsseiten nebeneinander derart angeordnet sind, dass deren Längsmittelachsen (12a,b) und damit deren Sende- bzw. Empfangsflächen (8a,b) geneigt zueinander orientiert sind.

2. Ultraschallprüfkopf nach Anspruch 1, bei dem die Sende- bzw. Empfangsflächen (8a,b) derart geneigt zueinander orientiert sind, dass sich die von den Sende- bzw. Empfangsflächen (8a,b) aufgespannten Ebenen in einer senkrecht zu den Längsmittelachsen (12a,b) verlaufenden Geraden schneiden

3. Ultraschallprüfkopf nach Anspruch 2, bei dem die senkrecht zur Längsmittelachse (12a,b) der Sende- bzw. Empfangsfläche (8a,b) der Wandlerarrays (4a,b) jeweils verlaufenden Mittelachsen (16a,b) der Sende- bzw. Empfangsflächen (8a,b) zusammenfallen.

4. Ultraschallprüfkopf nach einem der vorhergehenden Ansprüche, bei dem die Wandlerarrays (4a,b) baugleich sind.

5. Ultraschallprüfkopf nach Anspruch 4, bei dem der Neigungswinkel (ϕ), mit dem die Sende- bzw. Empfangsflächen (8a,b) zueinander geneigt sind, höchstens gleich dem Winkelbereich (α) ist, in dem bzw. aus dem die Wandlerelemente (4a,b) Ultraschallsignale emittieren bzw. empfangen können.

## Claims

1. Ultrasonic probe for checking a workpiece (20) in a concavely curved region of its surface, in the housing of which at least two linear transducer arrays (4a, b) serving as emitter and receiver transducers are formed, said transducer arrays (4a, b) each being formed of a plurality of transducer elements (6a, b) which can be controlled by each other with delayed-action and are arranged in a row in the direction of a central longitudinal axis (12a, b), and which are arranged side by side on their longitudinal sides in such a way that their central longitudinal axes (12a, b) and therefore their emitter or receiver surfaces (8a, b) are positioned to be tilting towards each other.

2. Ultrasonic probe according to claim 1, wherein the emitter or receiver surfaces (8a, b) are positioned to be tilting towards each other in such a way that the planes spanned by the emitter or receiver surfaces (8a, b) intersect in a straight line running perpendicularly to the central longitudinal axes (12a, b).

3. Ultrasonic probe according to claim 2, wherein the central axes (16a, b) of the emitter or receiver surfaces (8a, b) each running perpendicularly to the central longitudinal axis (12a, b) of the emitter or receiver surface (8a, b) of the transducer arrays (4a, b) coincide.

4. Ultrasonic probe according to one of the preceding claims, wherein the transducer arrays (4a, b) are constructed identically.

5. Ultrasonic probe according to claim 4, wherein the inclination angle (ϕ) at which the emitter or receiver surfaces (8a, b) are tilted towards each other is at most equal to the angular range (α) in or from which the transducer elements (4a, b) can emit or receive ultrasonic signals.

## Revendications

1. Tête de contrôle à ultrasons pour contrôler une pièce (20) à usiner dans une partie concave de sa surface, dans le boîtier de laquelle sont constitués des réseaux (4a, b) de transducteur linéaire servant de transducteur d'émission et de réception, qui sont constitués d'une pluralité d'éléments (6a, b) de transducteur, pouvant être commandés d'une manière retardée dans le temps les uns par rapport aux autres et disposés suivant une rangée dans la direction des axes (12a, b) médians longitudinaux, et qui sont disposés sur leur grand côté les uns à côté des autres de manière à ce que leurs axes (12a, b) médians longitudinaux et ainsi leurs surfaces (8a, b) d'émission ou de réception soient inclinés les uns par rapport aux autres.

2. Tête de contrôle à ultrasons suivant la revendication 1, dans laquelle les surfaces (8a, b) d'émission ou de réception sont inclinées les unes par rapport aux autres, de manière à ce que les plans passant par les surfaces (8a, b) d'émission et de réception se coupent suivant une droite s'étendant perpendiculairement aux axes (12a, b) médians longitudinaux.

3. Tête de contrôle à ultrasons suivant la revendication 2, dans laquelle les axes (16a, b) médians des surfaces (8a, b) d'émission et de réception, s'étendant respectivement perpendiculairement à l'axe (12a, b) médian longitudinal de la surface (8a, b) d'émission et de réception des réseaux (4a, b) de transducteur, coïncident.

4. Tête de contrôle à ultrasons suivant l'une des revendications précédentes, dans laquelle les réseaux (4a, b) de transducteur sont constitués de la même façon.

5. Tête de contrôle à ultrasons suivant la revendication 4, dans laquelle l'angle (ϕ) d'inclinaison, suivant lequel les surfaces (8a, b) d'émission et de réception sont inclinées l'une par rapport à l'autre, est au plus égal à la plage angulaire (α), dans laquelle ou à partir de laquelle les éléments (4a, b) de transducteur peuvent émettre ou recevoir des signaux d'ultrasons.
